# FASCICULE DE BREVET EUROPEEN

(11) **EP 3 129 631 B1**
(45) Date de publication et mention de la délivrance du brevet: **20.09.2017**
(21) Numéro de dépôt: 15719262.6
(22) Date de dépôt: 24.03.2015
(51) Int. Cl.: F02K 1/60, F02K 1/70, F02K 1/82

(54) **DISPOSITIF D'INVERSION DE POUSSÉE À PORTES POUR NACELLE DE TURBORÉACTEUR D'AÉRONEF**
SCHUBUMKEHRVORRICHTUNG MIT SCHWENKKLAPPEN FÜR EINE FLUGZEUG-TURBOSTRAHL-TRIEBWERKSGONDEL
DOOR-TYPE THRUST REVERSER DEVICE FOR AIRCRAFT TURBOJET ENGINE NACELLE

(30) Priorité: 08.04.2014 FR 1453106
(43) Date de publication de la demande: 15.02.2017
(73) Titulaire: Safran Nacelles, 76700 Gonfreville-l'Orcher (FR)
(72) Inventeur: CARUEL, Pierre, F-76600 Le Havre (FR); LE DOCTE, Thiery, F-76620 Le Havre (FR)
(74) Mandataire: Gaillarde, Frédéric F. Ch.
(86) Numéro de dépôt international: PCT/FR2015/050733
(87) Numéro de publication internationale: WO 2015/155432

(56) Documents cités:
- EP-A1- 0 632 196
- EP-A1- 1 327 767
- FR-A1- 2 319 771
- FR-A1- 2 568 315

## Description

La présente invention se rapporte à un inverseur de poussée à portes, à une nacelle équipée d'un tel inverseur de poussée, et à un ensemble propulsif comprenant une telle nacelle.

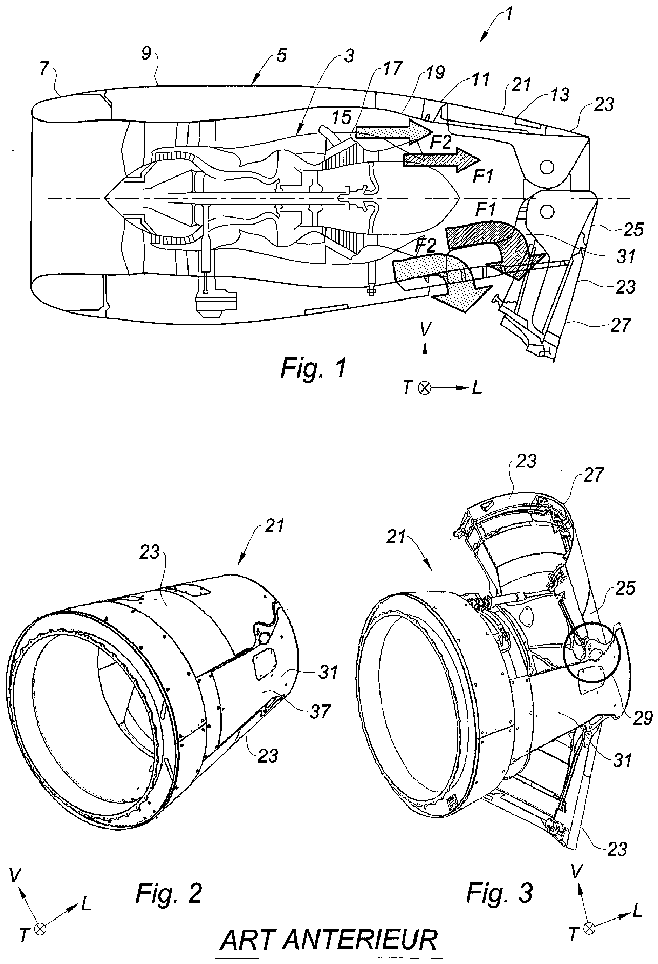

Un aéronef est propulsé par un ou plusieurs ensembles propulsifs. On se réfère à la figure 1 illustrant un exemple d'ensemble propulsif selon l'art antérieur. Un ensemble propulsif 1 comprend un turboréacteur 3 logeant dans une nacelle 5 tubulaire. Chaque ensemble propulsif est rattaché à l'avion par un mât, non représenté, situé généralement sous une aile ou au niveau du fuselage.

Une nacelle présente généralement une structure sensiblement tubulaire comprenant une section amont 7 définissant une entrée d'air, une section médiane 9 destinée à entourer une soufflante du turboréacteur, une section aval 11 pouvant abriter un dispositif d'inversion de poussée 13, et est généralement terminée par une tuyère d'éjection dont la sortie est située en aval du turboréacteur.

Les nacelles modernes sont destinées à abriter un turboréacteur double flux apte à générer par l'intermédiaire du générateur de gaz un flux d'air chaud F1, appelé flux primaire, et par l'intermédiaire des pales de la soufflante en rotation un flux d'air froid F2, appelé flux secondaire, qui circule à l'extérieur du turboréacteur 3 à travers un canal annulaire définissant une veine de circulation du flux d'air secondaire 15.

La veine 15 est délimitée entre un carénage interne 17 du turboréacteur et une enveloppe externe 19 abritant le dispositif d'inversion de poussée. Les deux flux d'air F1 et F2 sont éjectés du turboréacteur 3 par l'arrière de la nacelle.

Le document EP 1327767 A1 décrit un inverseur de poussée à portes comprenant un dispositif de refroidissement de la tuyère.

Dans la présente demande, l'amont et l'aval sont définis par rapport au sens d'écoulement de l'air dans l'ensemble propulsif en fonctionnement jet direct, l'entrée d'air étant située en amont par rapport à la tuyère d'éjection, située en aval de la nacelle.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct.

Dans les dispositifs d'inversion de poussée à portes, tel que celui qui équipe la nacelle représentée sur la figure 1, chaque capot mobile pivote de manière à venir bloquer le flux et le dévier et est donc actif dans cette réorientation.

Plus précisément, un dispositif d'inversion de poussée à portes 21 comprend plusieurs portes 23 montées pivotantes de manière à pouvoir, sous l'action de moyens d'entraînement, basculer entre une position escamotée correspondant à un fonctionnement de la nacelle en jet direct, position selon laquelle les portes 23 assurent, avec une structure fixe 31 du dispositif d'inversion de poussée, une continuité aérodynamique de la nacelle, position illustrée sur la figure 2, et une position déployée entraînant un fonctionnement de la nacelle en jet inverse, position illustrée sur la figure 3, position selon laquelle les portes 23 ont pivoté de façon à ce qu'une partie aval 25 de chaque porte obstrue au moins partiellement la veine 15 de circulation du flux d'air secondaire F2, et qu'une partie amont 27 ouvre dans la section aval 11 de la nacelle un passage 31 permettant aux flux d'air F1 et F2 d'être partiellement éjectés de la nacelle, puis redirigés vers l'amont de la nacelle par les portes 23 déployées.

Lorsqu'une porte est en position escamotée, correspondant à toutes les phases de vol exceptée celle de l'atterrissage, la porte est en contact avec le flux d"air froid traversant la veine de flux d'air secondaire.

Lorsque la porte passe de sa position escamotée vers sa position déployée, une partie du flux d'air primaire chaud traversant le turboréacteur entre en contact avec la porte.

La porte subit alors une élévation de la température, notamment au niveau des pivots de la porte et de zones 29 voisines des pivots de la porte. Une telle élévation de la température affaiblit considérablement la rigidité de la nacelle au niveau de ces zones.

Afin d'éviter un tel affaiblissement de structure, les pièces qui composent les zones qui entourent les pivots de porte, et les pivots de porte eux-mêmes, sont généralement surdimensionnées, ce qui augmente considérablement la masse de la nacelle.

De plus, ces pièces sont généralement réalisées dans des matériaux capables de résister à de telles températures élevées, tels que les résines thermodurcissables de type polybismaléimide, ou encore l'aluminium 2219, matériaux très onéreux.

La présente invention vise à réduire la masse des inverseurs de poussée à portes, et leur coût de fabrication.

Pour cela, la présente invention se rapporte à un dispositif d'inversion de poussée à portes pour nacelle de turboréacteur d'aéronef tel que défini par la revendication 1 et comprenant :
- une structure fixe, et
- une structure mobile par rapport à ladite structure fixe, comprenant au moins une porte montée pivotante par l'intermédiaire de pivots entre une position escamotée correspondant à un fonctionnement de la nacelle en jet direct, et une position déployée correspondant à un fonctionnement de la nacelle en jet inverse, remarquable en ce qu'il comprend un dispositif de prélèvement d'une partie d'un flux d'air secondaire, adapté pour prélever, quand l'inverseur est en cours de déploiement, une partie du flux d'air secondaire depuis une veine de circulation du flux d'air secondaire et pour acheminer ledit flux d'air prélevé vers au moins un pivot de la porte, de façon à refroidir les zones voisines des pivots de la porte.

Ainsi, en prévoyant un tel dispositif de prélèvement d'une partie du flux d'air secondaire, adapté pour prélever une partie du flux d'air froid circulant dans la veine secondaire de la nacelle, puis pour acheminer l'air prélevé vers un pivot de la porte, les pivots de la porte sont en permanence refroidis, quelle que soit la position de la porte, escamotée ou déployée.

Cela permet avantageusement de s'affranchir de la nécessité de réaliser les pivots de la porte et les zones voisines de ces pivots dans des matériaux particulièrement lourds et onéreux, ce qui permet de réduire à la fois la masse de la nacelle et le coût de fabrication des dispositifs d'inversion de poussée à portes.

Selon des caractéristiques toutes optionnelles de l'invention :
- la structure fixe comprend une paroi externe et une paroi interne en contact avec la veine de circulation du flux d'air secondaire et ladite paroi interne comprend au moins un jour de ventilation autorisant une communication entre la veine de circulation du flux d'air secondaire et un espace d'acheminement du flux d'air secondaire prélevé, défini entre lesdites parois interne et externe ;
- le dispositif de prélèvement d'une partie du flux d'air secondaire comprend au moins un clapet de ventilation mobile alternativement entre une position de fermeture selon laquelle il recouvre le jour de ventilation et une position d'ouverture selon laquelle il découvre au moins partiellement le jour de ventilation ;
- le clapet de ventilation est monté pivotant sur un axe sensiblement parallèle à un axe transverse à un axe longitudinal du dispositif d'inversion de poussée ;
- le dispositif de prélèvement d'une partie du flux d'air secondaire comprend des moyens adaptés pour maintenir le clapet de ventilation dans sa position de fermeture lorsque la porte est en position escamotée, et pour autoriser le passage dudit clapet de ventilation dans sa position d'ouverture lorsque ladite porte est en position déployée ;
- lesdits moyens adaptés pour maintenir le clapet de ventilation dans sa position de fermeture lorsque la porte est en position escamotée, et pour autoriser le passage dudit clapet de ventilation dans sa position d'ouverture lorsque ladite porte est en position déployée, comprennent au moins une rampe solidaire du clapet de ventilation, coopérant avec ladite porte lorsque ladite porte est en position escamotée et étant conformée pour autoriser le passage du clapet de ventilation depuis sa position de fermeture vers sa position d'ouverture lorsque la porte passe de sa position rétractée vers sa position déployée ;
- la porte comprend un dispositif de verrouillage/déverrouillage comprenant au moins un crochet de verrouillage solidaire de ladite porte, adapté pour coopérer avec un crochet solidaire de la structure fixe dudit dispositif d'inversion de poussée pour une position escamotée de ladite porte, et le crochet de verrouillage comprend un doigt formant extension supporté par la rampe du dispositif de prélèvement d'une partie du flux d'air secondaire lorsque la porte est en position escamotée ;
- le clapet de ventilation comprend des moyens élastiques adaptés pour rappeler en permanence ledit clapet dans sa position d'ouverture, ce qui permet une ouverture aisée du clapet lors d'opérations de maintenance, par une simple opération d'ouverture de la porte de l'inverseur;
- la structure fixe du dispositif d'inversion de poussée comprend au moins une sortie d'air à proximité des pivots de porte conformée pour évacuer au moins une partie du flux d'air secondaire prélevé.

La présente invention se rapporte également à une nacelle pour turboréacteur d'aéronef remarquable en ce qu'elle comprend au moins un dispositif d'inversion de poussée à portes selon l'invention.

La présente invention concerne enfin un ensemble propulsif pour aéronef comprenant un turboréacteur logeant dans une nacelle selon l'invention, remarquable en ce que le dispositif de prélèvement d'une partie du flux d'air secondaire est positionné en amont d'un plan d'éjection du flux d'air primaire du turboréacteur.

D'autres caractéristiques, buts et avantages de la présente invention apparaîtront à la lecture de la description qui va suivre et à l'examen des figures ci-annexées, dans lesquelles :
- la figure 1 illustre un ensemble propulsif comprenant une nacelle équipé d'un dispositif d'inversion de poussée à portes selon l'art antérieur ;
- la figure 2 représente en vue isométrique le dispositif d'inversion de poussée de la figure 1, représenté en position de fonctionnement jet direct ;
- la figure 3 est une vue similaire à celle de la figure 2, selon laquelle le dispositif d'inversion de poussée est représenté en position de fonctionnement jet inverse ;
- la figure 4 est une vue isométrique du dispositif d'inversion de poussée selon l'invention, représenté en position de fonctionnement de jet direct ;
- la figure 5 représente le dispositif de prélèvement d'une partie du flux d'air secondaire selon l'invention ;
- la figure 6 et 7 représentent la cinématique de déverrouillage des portes du dispositif d'inversion de poussée ;
- la figure 8 illustre l'acheminement du flux d'air prélevé dans la veine secondaire ;
- la figure 9 représente le dispositif d'inversion de poussée en position de fonctionnement de jet inverse.

A noter que dans la description et dans les revendications, les termes « amont » et « aval » doivent s'entendre par rapport à la circulation du flux d'air à l'intérieur de l'ensemble propulsif formé par la nacelle et le turboréacteur, c'est-à-dire de la gauche vers la droite en référence aux figures 1 à 9.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

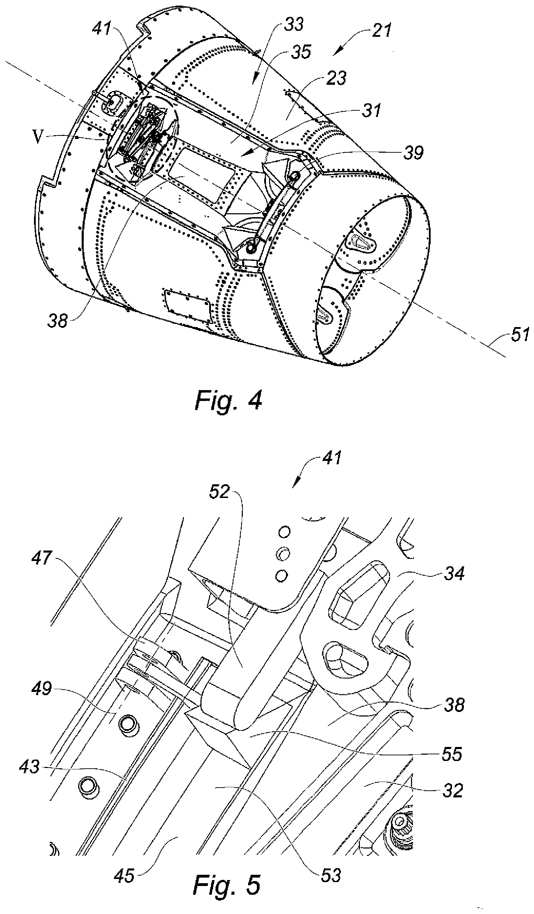

Par ailleurs, dans la description et les revendications, pour clarifier la description et les revendications, on adoptera à titre non limitatif la terminologie longitudinal, vertical et transversal en référence au trièdre direct L, V, T indiqué aux figures, dont l'axe longitudinal L est parallèle à l'axe longitudinal 51 de la nacelle représenté sur la figure 4.

En outre, sur l'ensemble des figures, des références identiques ou analogues représentent des organes ou ensembles d'organes identiques ou analogues.

On se réfère à la figure 4, représentant le dispositif d'inversion de poussée à portes 21 selon l'invention en position de fonctionnement jet direct.

Le dispositif d'inversion de poussée à portes, ci-après dénommé « l'inverseur » comprend une structure fixe 31 et une structure mobile 33 par rapport à ladite structure fixe.

La structure fixe 31 est constituée par une poutre de l'inverseur, comprenant une paroi interne 35 au contact de la veine 15 de circulation du flux d'air secondaire (visible sur la figure 1), et une paroi externe 37 (occultée de la figure 4, visible sur la figure 2) séparée de la paroi interne par un espace 38.

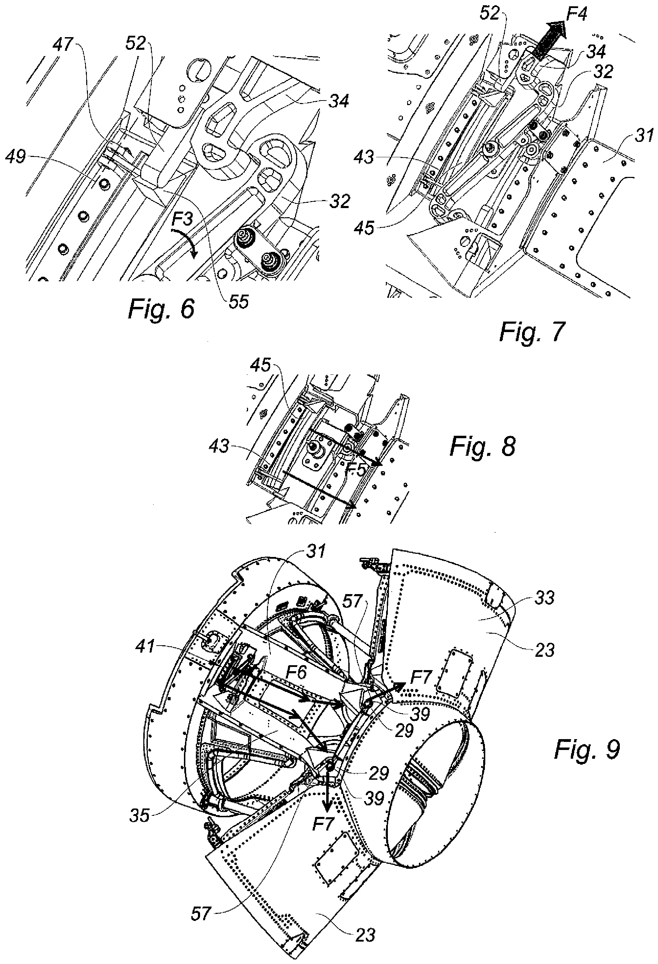

La structure mobile 33 comprend quant à elle plusieurs portes 23, par exemple deux, montées pivotantes par l'intermédiaire de pivots 39 entre une position escamotée selon laquelle elles assurent, avec la structure fixe 31 de l'inverseur, une continuité aérodynamique externe de la nacelle, correspondant à un fonctionnement de la nacelle en jet direct, position représentée sur la figure 4, et une position déployée selon laquelle elle crée un passage dans la nacelle, correspondant à un fonctionnement de la nacelle en jet inverse, position représentée sur la figure 9.

De façon connue, le maintien des portes en position escamotée est réalisé par l'intermédiaire d'un crochet 32 en forme de S (visible à la figure 5) monté sur la structure fixe 31 de l'inverseur, coopérant à chacune de ses extrémités avec un crochet de verrouillage 34 solidaire de chacune des portes. Le crochet 32 est monté pivotant, par l'intermédiaire de moyen d'actionnement, de sorte que le pivotement du crochet 32 libère les crochets de verrouillage 34 des portes, autorisant ainsi le passage des portes depuis une position escamotée vers une position déployée.

Comme représentée à la figure 1, en position de fonctionnement en jet direct, le flux d'air froid F2, généré par l'intermédiaire des pales de la soufflante en rotation du turboréacteur double flux logeant dans la nacelle, circule dans le canal annulaire définissant la veine 15 de circulation du flux d'air secondaire et est éjecté par l'aval de la nacelle.

Selon l'invention, l'inverseur comprend un dispositif 41 de prélèvement d'une partie du flux d'air secondaire, adapté pour prélever une partie du flux d'air secondaire depuis une veine de circulation du flux d'air secondaire et pour acheminer ledit flux d'air prélevé vers au moins un pivot de la porte.

Le dispositif d'inversion de poussée est susceptible d'équiper une nacelle supportant un turboréacteur double flux, et le dispositif de prélèvement d'une partie du flux d'air secondaire est positionné en amont d'un plan d'éjection du flux d'air primaire du turboréacteur, ce qui permet de prélever uniquement de l'air froid, non mélangé au flux d'air primaire chaud provenant du turboréacteur.

On se réfère à la figure 5, illustrant un agrandissement de la zone V de la figure 4.

Selon l'invention, la paroi interne 35 comprend, pour chacune des poutres de la structure fixe de l'inverseur, au moins un jour de ventilation 43 formant communication entre la veine de circulation du flux d'air secondaire et l'espace 38 d'acheminement du flux d'air secondaire prélevé.

Le jour de ventilation 43 est susceptible d'être obturé par un clapet de ventilation 45 monté pivotant par l'intermédiaire d'une charnière 47 sur un axe 49 sensiblement parallèle à un axe transverse à un axe longitudinal 51 de l'inverseur, représenté sur la figure 4.

Le crochet de verrouillage 34 de la porte est solidaire d'un doigt 52 formant extension du crochet de verrouillage.

Le doigt 52 est supporté, lorsque la porte est en position escamotée représentée sur la figure 5, par une rampe 55 solidaire de la paroi externe 53 du clapet de ventilation 45.

Le fonctionnement du dispositif 41 de prélèvement d'une partie du flux d'air secondaire va à présent être décrit.

Lorsque la porte est en position escamotée, position représentée sur la figure 5, la rampe 55, solidaire du clapet de ventilation 45, coopère avec la porte de l'inverseur par l'intermédiaire du doigt 52, maintenant le clapet de ventilation 45 dans une position de fermeture selon laquelle il obture le jour de ventilation 43.

A ce stade, le flux d'air secondaire circulant dans la veine secondaire traverse la veine et est éjecté classiquement par l'aval de la nacelle.

Lorsque le fonctionnement de la nacelle en jet inverse est commandé, le crochet 32 en forme de S pivote autour d'un axe parallèle à un axe sensiblement vertical de l'inverseur, ce qui libère le crochet de verrouillage 34 de la porte, comme représenté aux figures 6 à 8 auxquelles on se réfère à présent.

Lorsque le crochet 32 en forme de S pivote selon la flèche F3 représentée sur la figure 6, le crochet de verrouillage 34 solidaire de la porte est déverrouillé, ce qui entraîne le passage de la porte depuis sa position escamotée vers sa position déployée, selon la flèche F4 représentée sur la figure 7.

Lorsque la porte se déplace vers sa position déployée, le doigt 52 solidaire du crochet 34 se déplace le long de la rampe 55, libérant alors le clapet de ventilation 45.

Le clapet de ventilation, en contact permanent avec le flux d'air secondaire s'écoulant dans la veine secondaire, pivote autour de l'axe 49 de la charnière 47, en direction de l'espace 38 contenu entre les parois interne et externe de la structure fixe de l'inverseur sous l'effet de la pression générée par le flux d'air secondaire.

Le clapet de ventilation 45 passe alors de sa position de fermeture vers sa position d'ouverture, découvrant ainsi le jour de ventilation 43.

Alternativement, des moyens élastiques tels qu'un ressort de torsion peuvent être montés sur l'axe de pivotement du clapet de ventilation de façon à rappeler en permanence le clapet dans sa position d'ouverture, ce qui permet une ouverture aisée du clapet lors d'opérations de maintenance, par une simple opération d'ouverture de la porte de l'inverseur.

Lorsque le clapet de ventilation se trouve dans sa position d'ouverture, le flux d'air secondaire s'écoulant dans la veine secondaire traverse alors le jour de ventilation 43, comme représenté par la flèche F5 représentée sur la figure 8.

Le flux d'air prélevé depuis la veine secondaire est ensuite acheminé le long de la paroi interne 35 selon la flèche F6 de la figure 9, jusqu'aux pivots 39 des portes 23, permettant de rafraîchir les pivots 39 et les zones 29 voisines des pivots.

Les zones 29 voisine des pivots comprennent des sorties d'air 57 conformées pour évacuer au moins en partie le flux d'air secondaire prélevé, selon les flèches F7.

Ainsi, grâce à la présente invention, on réduit considérablement la masse de la nacelle et le coût de fabrication de l'inverseur de poussée à portes en ce qu'il n'est plus nécessaire de prévoir des pivots de porte dans des matériaux capables de résister aux températures importantes générés par le flux d'air primaire provenant du turboréacteur.

Comme il va de soi, l'invention ne se limite pas aux seules formes de réalisation du dispositif de poussée, de la nacelle et de l'ensemble propulsif, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention telle que définie par les revendications.

## Revendications

1. Dispositif d'inversion de poussée à portes (21) pour nacelle de turboréacteur d'aéronef comprenant :
- une structure fixe (31), et
- une structure mobile (33) par rapport à ladite structure fixe, comprenant au moins une porte (23) montée pivotante par l'intermédiaire de pivots (39) entre une position escamotée correspondant à un fonctionnement de la nacelle en jet direct, et une position déployée correspondant à un fonctionnement de la nacelle en jet inverse,
ledit dispositif d'inversion de poussée étant **caractérisé en ce qu'**il comprend un dispositif (41) de prélèvement d'une partie d'un flux d'air secondaire, adapté pour prélever une partie du flux d'air secondaire depuis une veine (15) de circulation du flux d'air secondaire et pour acheminer ledit flux d'air prélevé vers au moins un pivot (39) de la porte, de façon à refroidir les zones (29) voisines des pivots (39) de la porte (23), lesdites zones (29) voisines des pivots (39) comprenant des sorties d'air (57) conformées pour évacuer au moins en partie le flux d'air secondaire prélevé.

2. Dispositif d'inversion de poussée selon la revendication 1, dans lequel la structure fixe (31) comprend une paroi externe (37) et une paroi interne (35) en contact avec la veine (15) de circulation du flux d'air secondaire, **caractérisé en ce que** ladite paroi interne (35) comprend au moins un jour de ventilation (43) autorisant une communication entre la veine (15) de circulation du flux d'air secondaire et un espace (38) d'acheminement du flux d'air secondaire prélevé, défini entre lesdites parois interne et externe.

3. Dispositif d'inversion de poussée selon la revendication 2, **caractérisé en ce que** le dispositif (41) de prélèvement d'une partie du flux d'air secondaire comprend au moins un clapet de ventilation (45) mobile alternativement entre une position de fermeture selon laquelle il recouvre le jour de ventilation (43) et une position d'ouverture selon laquelle il découvre au moins partiellement le jour de ventilation (43).

4. Dispositif d'inversion de poussée selon la revendication 3, **caractérisé en ce que** le clapet de ventilation (45) est monté pivotant sur un axe (49) sensiblement parallèle à un axe transverse à un axe longitudinal (51) du dispositif d'inversion de poussée.

5. Dispositif d'inversion de poussée selon l'une des revendications 3 ou 4, **caractérisé en ce que** le dispositif (41) de prélèvement d'une partie du flux d'air secondaire comprend des moyens adaptés pour maintenir le clapet de ventilation (45) dans sa position de fermeture lorsque la porte (23) est en position escamotée, et pour autoriser le passage dudit clapet dans sa position d'ouverture lorsque ladite porte est en position déployée.

6. Dispositif d'inversion de poussée selon la revendication 5, **caractérisé en ce que** lesdits moyens adaptés pour maintenir le clapet de ventilation (45) dans sa position de fermeture lorsque la porte (23) est en position escamotée, et pour autoriser le passage dudit clapet dans sa position d'ouverture lorsque ladite porte est en position déployée, comprennent au moins une rampe (55) solidaire dudit clapet de ventilation (45), coopérant avec ladite porte (23) lorsque ladite porte est en position escamotée et étant conformée pour autoriser le passage dudit clapet de ventilation depuis sa position de fermeture vers sa position d'ouverture lorsque la porte passe de sa position rétractée vers sa position déployée.

7. Dispositif d'inversion de poussée selon la revendication 6, dans lequel la porte (23) comprend un dispositif de verrouillage/déverrouillage comprenant au moins un crochet de verrouillage (34) solidaire de ladite porte, adapté pour coopérer avec un crochet (32) solidaire de la structure fixe (31) dudit dispositif d'inversion de poussée pour une position escamotée de ladite porte, **caractérisé en ce que** le crochet de verrouillage (34) comprend un doigt (52) formant extension supporté par la rampe (55) du dispositif (41) de prélèvement d'une partie du flux d'air secondaire lorsque la porte est en position escamotée.

8. Dispositif d'inversion de poussé selon l'une quelconque des revendications 3 à 7, **caractérisé en ce que** le clapet de ventilation (45) comprend des moyens élastiques adaptés pour rappeler en permanence ledit clapet dans sa position d'ouverture.

9. Dispositif d'inversion de poussée selon l'une quelconque des revendications 1 à 8, **caractérisé en ce que** la structure fixe (31) du dispositif d'inversion de poussée comprend au moins une sortie d'air (57) à proximité des pivots (39) de porte conformée pour évacuer au moins une partie du flux d'air secondaire prélevé.

10. Nacelle pour turboréacteur d'aéronef **caractérisée en ce qu'**elle comprend au moins un dispositif d'inversion de poussée à portes (21) selon l'une quelconque des revendications 1 à 9.

11. Ensemble propulsif pour aéronef comprenant un turboréacteur logeant dans une nacelle selon la revendication 10, **caractérisé en ce que** le dispositif (41) de prélèvement d'une partie du flux d'air secondaire est positionné en amont d'un plan d'éjection du flux d'air primaire du turboréacteur.

## Patentansprüche

1. Schubumkehrvorrichtung mit Türen (21) für eine Turbotriebwerksgondel eines Luftfahrzeugs, umfassend:
- eine feststehende Struktur (31), und
- eine im Verhältnis zur besagten feststehenden Struktur bewegliche Struktur (33), zumindest eine Tür (23) umfassend, die über Drehpunkte (39) zwischen einer eingefahrenen Position, die einem Direktstrahlbetrieb der Gondel entspricht, und einer ausgefahrenen Position schwenkbar montiert ist, die einem Umkehrstrahlbetrieb der Gondel entspricht,
wobei die besagte Schubumkehrvorrichtung **dadurch gekennzeichnet ist, dass** sie eine Vorrichtung (41) zur Entnahme eines Teils eines Sekundärluftstroms umfasst, ausgeführt, um einen Teil des Sekundärluftstroms aus einer Zirkulationsader (15) des Sekundärluftstroms zu entnehmen, und um den besagten entnommenen Luftstrom zu zumindest einem Drehpunkt (39) der Tür zu befördern, um die benachbarten Zonen (29) der Drehpunkte (39) der Tür (23) zu kühlen, wobei die besagten benachbarten Zonen (29) der Drehpunkte (39) Luftausgänge (57) umfassen, die ausgeformt sind, um zumindest teilweise den entnommenen Sekundärluftstrom abzuführen.

2. Schubumkehrvorrichtung nach Anspruch 1, wobei die feststehende Struktur (31) eine externe Wand (37) und eine interne Wand (35) in Kontakt mit der Zirkulationsader (15) des Sekundärluftstroms umfasst, **dadurch gekennzeichnet, dass** die besagte interne Wand (35) zumindest eine Lüftungsöffnung (43) umfasst, die eine Verbindung zwischen der Zirkulationsader (15) des Sekundärluftstroms und einem Zwischenraum (38) zur Beförderung des entnommenen Sekundärluftstroms ermöglicht, der zwischen der besagten internen und externen Wand definiert wird.

3. Schubumkehrvorrichtung nach Anspruch 2, **dadurch gekennzeichnet, dass** die Vorrichtung (41) zur Entnahme eines Teils des Sekundärluftstroms zumindest eine Lüftungsklappe (45) umfasst, die abwechselnd zwischen einer Schließposition, in der sie die Lüftungsöffnung (43) abdeckt, und einer Öffnungsposition beweglich ist, in der sie die Lüftungsöffnung (43) zumindest teilweise offenlegt.

4. Schubumkehrvorrichtung nach Anspruch 3, **dadurch gekennzeichnet, dass** die Lüftungsklappe (45) schwenkbar auf einer Achse (49) montiert ist, die in etwa parallel zu einer zu einer Längsachse (51) der Schubumkehrvorrichtung querlaufenden Achse verläuft.

5. Schubumkehrvorrichtung nach einem der Ansprüche 3 oder 4, **dadurch gekennzeichnet, dass** die Vorrichtung (41) zur Entnahme eines Teils des Sekundärluftstroms Mittel umfasst, die ausgeführt sind, um die Lüftungsklappe (45) in ihrer Schließposition zu halten, wenn die Tür (23) in der eingefahrenen Position ist, und um den Übergang der besagten Klappe in ihre Öffnungsposition zu erlauben, wenn die besagte Tür in der ausgefahrenen Position ist.

6. Schubumkehrvorrichtung nach Anspruch 5, **dadurch gekennzeichnet, dass** die besagten Mittel, die ausgeführt sind, um die Lüftungsklappe (45) in ihrer Schließposition zu halten, wenn die Tür (23) in der eingefahrenen Position ist, und um den Übergang der besagten Klappe in ihre Öffnungsposition zu erlauben, wenn die besagte Tür in der ausgefahrenen Position ist, zumindest eine Rampe (55) umfassen, die fest mit der besagten Lüftungsklappe (45) verbunden ist, die mit der besagten Tür (23) zusammenwirkt, wenn die besagte Tür in der eingefahrenen Position ist, und ausgeformt ist, um den Übergang der besagten Lüftungsklappe von ihrer Schließposition in ihre Öffnungsposition zu erlauben, wenn die besagte Tür von ihrer zurückgezogenen Position in ihre ausgefahrene Position übergeht.

7. Schubumkehrvorrichtung nach Anspruch 6, wobei die Tür (23) eine Verriegelungs-/ Freigabevorrichtung umfasst, die zumindest einen Verriegelungshaken (34) umfasst, der fest mit der besagten Tür verbunden ist, ausgeführt, um mit einem Haken (32), der fest mit der feststehenden Struktur (31) der besagten Schubumkehrvorrichtung verbunden ist, für eine eingefahrene Position der besagten Tür zusammenzuwirken, **dadurch gekennzeichnet, dass** der Verriegelungshaken (34) einen Stift (52) umfasst, der eine Erweiterung bildet, die von der Rampe (55) der Vorrichtung (41) zur Entnahme eines Teils des Sekundärluftstroms getragen wird, wenn die Tür in der eingefahrenen Position ist.

8. Schubumkehrvorrichtung nach einem der Ansprüche 3 bis 7, **dadurch gekennzeichnet, dass** die Lüftungsklappe (45) elastische Mittel umfasst, die ausgeführt sind, um die besagte Klappe permanent in ihre Öffnungsposition zurückzustellen.

9. Schubumkehrvorrichtung nach einem der Ansprüche 1 bis 8, **dadurch gekennzeichnet, dass** die feststehende Struktur (31) der Schubumkehrvorrichtung zumindest einen Luftauslass (57) in der Nähe der Drehpunkte (39) der Tür umfasst, der ausgeformt ist, um zumindest einen Teil des entnommenen Sekundärluftstroms abzuführen.

10. Turbotriebwerksgondel eines Luftfahrzeugs, **dadurch gekennzeichnet, dass** sie zumindest eine Schubumkehrvorrichtung mit Türen (21) nach einem der Ansprüche 1 bis 9 umfasst.

11. Antriebseinheit für ein Luftfahrzeug, ein Turbotriebwerk umfassend, das in einer Gondel nach Anspruch 10 untergebracht ist, **dadurch gekennzeichnet, dass** die Vorrichtung (41) zur Entnahme eines Teils eines Sekundärluftstroms stromaufwärts einer Ablassebene des Primärluftstroms des Turbotriebwerks positioniert ist.

## Claims

1. A thrust reverser device with doors (21) for a nacelle of an aircraft turbojet engine comprising:
- a fixed structure (31), and
- a movable structure (33) relative to said fixed structure, comprising at least one door (23) pivotally mounted by means of pivots (39) between a retracted position corresponding to an operation of the direct jet nacelle, and a deployed position corresponding to an operation of the reverse jet nacelle,
said thrust reverser device being **characterized in that** it comprises a device (41) for collecting part of a secondary air flow, adapted to collect part of the secondary air flow from a flow path (15) for circulating the secondary air flow and to convey said collected air flow to at least one pivot (39) of the door, so as to cool the adjacent areas (29) of the pivots (39) of the door (23), said adjacent areas (29) of the pivots (39) comprising air outlets (57) shaped to discharge at least partly the collected secondary air flow.

2. The thrust reverser device according to claim 1, wherein the fixed structure (31) comprises an outer wall (37) and an inner wall (35) in contact with the flow path (15) for circulating the secondary air flow, **characterized in that** said inner wall (35) comprises at least one ventilation aperture (43) enabling a communication between the flow path (15) for circulating the secondary air flow and a space (38) for conveying the collected secondary air flow, defined between said inner and outer walls.

3. The thrust reverser device according to claim 2, **characterized in that** the device (41) for collecting part of the secondary air flow comprises at least one ventilation valve (45) alternately movable between a closed position in which it covers the ventilation aperture (43) and an open position in which it uncovers at least partly the ventilation aperture (43).

4. The thrust reverser device according to claim 3, **characterized in that** the ventilation valve (45) is pivotally mounted on an axis (49) substantially parallel to an axis transverse to a longitudinal axis (51) of the thrust reverser device.

5. The thrust reverser device according to any of claims 3 or 4, **characterized in that** the device (41) for collecting part of the secondary air flow comprises means adapted to maintain the ventilation valve (45) in its closed position when the door (23) is in the retracted position, and to enable the passage of said valve in its open position when said door is in the deployed position.

6. The thrust reverser device according to claim 5, **characterized in that** said means adapted to maintain the ventilation valve (45) in its closed position when the door (23) is in the retracted position, and to enable the passage of said valve in its open position when said door is in the deployed position, comprise at least one ramp (55) secured to said ventilation valve (45), cooperating with said door (23) when said door is in the retracted position and being shaped to enable the passage of said ventilation valve from its closed position to its open position when the door switches from its retracted position to its deployed position.

7. The thrust reverser device according to claim 6, wherein the door (23) comprises a locking/unlocking device comprising at least one locking hook (34) secured to said door, adapted to cooperate with a hook (32) secured to the fixed structure (31) of said thrust reverser device for a retracted position of said door, **characterized in that** the locking hook (34) comprises a finger (52) forming an extension supported by the ramp (55) of the device (41) for collecting part of the secondary air flow when the door is in the retracted position.

8. The thrust reverser device according to any one of claims 3 to 7, **characterized in that** the ventilation valve (45) comprises elastic means adapted to permanently return said valve to its open position.

9. The thrust reverser device according to any one of claims 1 to 8, **characterized in that** the fixed structure (31) of the thrust reverser device comprises at least one air outlet (57) proximate the door pivots (39) shaped to discharge at least part of the collected secondary air flow.

10. A nacelle for an aircraft turbojet engine **characterized in that** it comprises at least one thrust reverser device with doors (21) according to any one of claims 1 to 9.

11. A propulsion unit for an aircraft comprising a turbojet engine housing in a nacelle according to claim 10, **characterized in that** the device (41) for collecting part of the secondary air flow is positioned upstream of a plane for ejecting the primary air flow of the turbojet engine.
